# EUROPEAN PATENT SPECIFICATION

(11) **EP 3 263 864 B1**
(45) Date of publication and mention of the grant of the patent: **27.03.2019**
(21) Application number: 16755252.0
(22) Date of filing: 12.02.2016
(51) Int. Cl.: F02D 41/00, F02B 37/00

(54) **ENGINE START-UP DEVICE, START-UP METHOD, AND SHIP EQUIPPED WITH START-UP DEVICE**
MOTORSTARTVORRICHTUNG, STARTVERFAHREN UND MIT DER STARTVORRICHTUNG AUSGESTATTETES SCHIFF
DISPOSITIF DE DÉMARRAGE DE MOTEUR, PROCÉDÉ DE DÉMARRAGE ET NAVIRE ÉQUIPÉ DU DISPOSITIF DE DÉMARRAGE

(30) Priority: 27.02.2015 JP 2015038284
(43) Date of publication of application: 03.01.2018
(73) Proprietor: Mitsubishi Heavy Industries, Ltd., Tokyo 108-8215 (JP)
(72) Inventor: SHIRAISHI, Keiichi, Nagasaki-shi Nagasaki 850-8610 (JP); ONO, Yoshihisa, Nagasaki-shi Nagasaki 850-8610 (JP)
(74) Representative: Hoffmann Eitle
(86) International application number: PCT/JP2016/054166
(87) International publication number: WO 2016/136505

(56) References cited:
- WO-A1-2013/124532
- DE-A1- 4 002 081
- DE-A1-102005 054 446
- GB-A- 2 442 794
- JP-A- H06 323 152
- JP-A- 2004 340 122
- JP-A- 2004 340 122
- JP-A- 2014 206 127
- US-A- 2 585 029
- US-A- 2 585 029
- US-A- 3 676 999
- US-B2- 6 938 420

## Description

### {Technical Field}

The present invention relates to an engine starting equipment adequate for marine large-sized two-cycle diesel engines and the like, a starting method, and a ship equipped with such starting equipment.

### {Background Art}

As disclosed in Japanese Unexamined Patent Application, Publication No. 2010-127239, an electric exhaust gas turbocharger (hybrid turbocharger) is put in practical use as a turbocharger provided in marine large-sized two-cycle diesel engines and the like. The electric exhaust gas turbocharger is configured such that an electric motor used also as a power generator is directly coupled with a rotor shaft of the turbocharger.

In the electric exhaust gas turbocharger, rotation of the rotor shaft is assisted by making the electric motor activated following after an engine output of an engine body during low load operation of the engine or during increase in engine output in order to prevent temporary air supply shortage of the engine body.

JP 2004-340122 A discloses a control device for an internal combustion engine having a supercharger with a motor which improves the start-up performance and warm-up performance.

US 2,585,029 A describes a self-powered turbosupercharger starter system for internal combustion engines with an electric motor which assists rotation of a compressor. By injecting fuel into a chamber connected to a conduit, high-temperature gas is introduced into a turbine to drive it. When the speed of the turbine exceeds the speed of the motor, the motor is uncoupled by a clutch.

US 3,376,999 A and GB 2 442 794 A describe a supercharging means for an internal combustion engine which represents the closest prior art.

### {Summary of Invention}

### {Technical Problem}

In the marine large-sized two-cycle diesel engine equipped with such an electric exhaust gas turbocharger, the electric motor increases the rotating speed of the rotor shaft of the turbocharger in advance before start of the engine, so that the compressor in the turbocharger can be driven to generate compressed air. The compressed air is sent to a scavenging air receiver so that the pressure in the scavenging air receiver can be boosted. Moreover, the rotation speed of the compressor is quickly increased concurrently with the start of the engine, so that generation of engine smoke caused by temporary shortage in the amount of air can be suppressed.

Therefore, it is also expected that the engine can be started without using an electric auxiliary blower (fan) which is conventionally installed on the engine so as to send air to the scavenging air receiver in a range where boosting of the scavenging pressure by the turbocharger is difficult (e.g. from the start of the engine to a low-load range). It is also expected to increase the amount of air supply at the start of the engine to improve a combustion process and to thereby decrease the amount of engine smoke at the engine start.

However, in uniflow-type marine large-sized two-cycle diesel engines equipped with exhaust gas valves that are hydraulically opened and closed, all the exhaust gas valves in each cylinder are closed before the start of the engine due to loss of the hydraulic pressure for driving. Accordingly, when the turbocharger is rotated before the engine start as mentioned above, the compressed air discharged from the compressor of the turbocharger remains in the scavenging air receiver without flowing in a continuous manner. As a result, surging occurs in the compressor, resulting in generation of vibration, abnormal noise, increase of compressor temperature, and the like.

Before the start of the engine, exhaust gas does not flow into an exhaust gas turbine of the turbocharger, and therefore rotational driving force with the energy of the exhaust gas cannot be obtained. Accordingly, the rotor shaft of the turbocharger needs to be rotated only with an output of the electric motor, which causes a problem of increased electric power required by the electric motor.

Furthermore, the electric auxiliary blower is conventionally used to boost the pressure of the scavenging air receiver at the start of the engine. However, installation of the electric auxiliary blower complicates the configuration of the engine starter, and power consumption of the electric auxiliary blower needs to be considered.

The present invention has been made in view of such circumstances, and it is therefore an object of the present invention to provide a starting equipment of an engine, a starting method, and a ship equipped with the starting equipment capable of starting the engine with less power consumption while rotationally driving a compressor with an electric motor and preventing surging of the compressor and also capable of decreasing the amount of engine smoke at the start of the engine.

### {Solution to Problem}

This object is solved by a starting equipment with the features of claim 1, a starting method with the features of claim 6, and a ship according to claim 5 with the inventive starting equipment. Preferred embodiments follow from the other claims. The present invention employs the following solutions to solve the foregoing problems.

That is, a starting equipment of an engine according to the present invention is a starting equipment of an engine equipped with an electric exhaust gas turbocharger having an electric motor configured to assist rotation of a compressor, the starting equipment of an engine including: a bypass passage configured to connect a compressed air outlet of the compressor and an exhaust gas inlet of an exhaust gas turbine; a bypass valve configured to open and close the bypass passage; and a start control unit configured to open the bypass valve and rotate the compressor with the electric motor before start of the engine, to keep the compressor rotating with the electric motor at least at the start of the engine, and to close the bypass valve at a timing corresponding to the start of the engine.

According to the starting equipment of an engine with the above configuration, the start control unit opens the bypass valve and rotates the compressor of the electric exhaust gas turbocharger with the electric motor before start of the engine. The air compressed in the compressor flows from the compressed air outlet of the compressor and through the bypass passage into the exhaust gas inlet of the exhaust gas turbine.

Accordingly, in a uniflow-type two-cycle engine, even when the exhaust gas valve is closed and the compressed air from the compressor cannot flow into a scavenging air receiver because the engine is not yet started, stagnation of the compressed air can be prevented, so that surging of the compressor can be avoided. The rotation speed of the compressor can also be kept to the level necessary to secure the scavenging pressure high enough to suppress smoke emission at the start of the engine.

Although motive power is needed to rotate the compressor with the electric motor to generate compressed air, the generated compressed air, which is supplied to the exhaust gas turbine through the bypass passage, rotationally drives the exhaust gas turbine and also rotationally drives the compressor coaxial with the exhaust gas turbine. Accordingly, it is possible to drive the compressor with less power, so that the required power of the electric motor can drastically be reduced compared with the case where the bypass passage is not provided.

Next, the engine is started while the electric motor rotates the compressor. In the marine large-sized two-cycle diesel engine, a combustion cylinder having a piston at an expansion stroke position is charged with starting compressed air, so that the piston is depressed. As a result, the engine can be started.

Since the electric motor rotates the compressor of the electric turbocharger in advance before the start of the engine, the rotation speed of the compressor can quickly be boosted concurrently with the start of the engine. Accordingly, a sufficient amount of air can be provided at the start of the engine.

Therefore, the pressure of the scavenging air receiver can be boosted and the two-cycle engine can be started with less power consumption. As a result, it becomes unnecessary to boost the pressure of the scavenging air receiver by using an electric auxiliary blower as in the conventional cases, so that the electric auxiliary blower can be omitted. In addition, it also is possible to increase the amount of combustion air at the start of the engine to enhance the combustion process, and to decrease the amount of engine smoke.

The start control unit closes the bypass valve at the timing corresponding to the start of the engine. As a consequence, the compressed air generated in the compressor is no longer supplied to the exhaust gas turbine, so that all the compressed air is sent to the engine (scavenging air receiver), and the engine shifts to normal operation.

Incidentally, it is preferable that a passage extending from the compressor to the engine is constantly opened. Accordingly, in the two-cycle engine in particular, the pressure of the scavenging air receiver can be boosted higher than the atmospheric pressure to enhance engine starting performance.

When the engine is a two-cycle engine, the compressed air of the compressor driven with the electric motor is preferably supplied to the bypass passage and the scavenging air receiver of the engine before the start of the engine.

According to the above configuration, when the electric motor drives the compressor before engine start, the pressure of the compressed air discharged from the compressor is applied to the scavenging air receiver, and the scavenging air receiver is pressurized to the pressure in the compressed air outlet of the compressor. Accordingly, it is possible to boost the pressure of the scavenging air receiver to be higher than the atmospheric pressure to sufficiently secure the amount of air necessary for start of the engine. It also is possible to suppress generation of engine smoke caused by temporary shortage in the air amount.

When the engine is a two-cycle engine, the timing of closing the bypass valve is preferably immediately after the start of the two-cycle engine.

Accordingly, it is possible to reliably prevent occurrence of surging in the compressor due to the influence of the compressed air which cannot flow into the scavenging air receiver before the start of the engine.

A ship according to the present invention is equipped with any one of the aforementioned starting equipments of an engine. When the engine is a uniflow-type two-cycle engine, the ship can start the engine with less power consumption without causing surging of the compressor, even when the exhaust valves of the engine are closed because the engine is not yet started.

In addition, since the pressure of the scavenging air receiver can be boosted at the engine start, the combustion state at the engine start can be enhanced, and the amount of engine smoke can be decreased.

A starting method of an engine according to the present invention is a starting method of an engine equipped with an electric exhaust gas turbocharger having an electric motor that assists rotation of a compressor, the starting method including: a supercharge preparing step of rotating the compressor of the electric exhaust gas turbocharger with the electric motor and supplying the compressed air discharged from the compressor to an exhaust gas turbine before start of the engine; an engine starting step of starting the engine while rotating the compressor with the electric motor; and a supercharge starting step of supplying the compressed air to the engine at a timing corresponding to the start of the engine.

In the aforementioned starting method of an engine, the compressor is first rotated with the electric motor, and the compressed air discharged from the compressor is supplied to the exhaust gas turbine in the supercharge preparing step. As a consequence, the air compressed in the compressor is supplied to the exhaust gas inlet of the exhaust gas turbine, and the scavenging air receiver is pressurized to the pressure in the compressed air outlet of the compressor.

Accordingly, in a uniflow-type two-cycle engine, even when the exhaust valve is closed and the compressed air from the compressor cannot flow into a scavenging air receiver because the engine is not yet started, stagnation of the compressed air can be prevented, which can avoid occurrence of surging in the compressor. The rotation speed of the compressor can also be kept to the level necessary to secure the scavenging pressure high enough to suppress smoke emission at the start of the engine.

Although motive power is needed to rotate the compressor with the electric motor to generate compressed air, the generated compressed air, which is supplied to the exhaust gas turbine, rotationally drives the exhaust gas turbine and also rotationally drives the compressor coaxial with the exhaust gas turbine. Accordingly, it is possible to drive the compressor with less power, so that the required power of the electric motor can drastically be reduced compared with the case where the compressed air is not supplied to the exhaust gas turbine.

Next, the engine is started while the electric motor rotates the compressor in the engine starting step. Since the rotation speed of the compressor is boosted in advance in the supercharge preparing step, the pressure of the scavenging air receiver can quickly be boosted concurrently with the start of the engine in the two-cycle engine. Accordingly, enough combustion air can be supplied from the scavenging air receiver to the engine to allow sufficient start of the engine.

Therefore, the pressure of the scavenging air receiver can be boosted to start the two-cycle engine with less power consumption. As a result, it becomes unnecessary to boost the pressure of the scavenging air receiver by using an electric auxiliary blower as in the conventional cases. Therefore, the electric auxiliary blower can be omitted. In addition, it also is possible to increase the amount of combustion air at the start of the engine to enhance the combustion state, and to thereby decrease the amount of engine smoke.

Next, in the supercharge starting step, the compressed air generated in the compressor is supplied to the engine side at the timing corresponding to the start of the engine. As a consequence, the compressed air is sent to the engine (scavenging air receiver), and the engine shifts to normal operation.

### {Advantageous Effects of Invention}

As described in the foregoing, the starting equipment of an engine, the starting method, and the ship equipped with the starting equipment according to the present invention can start the engine with less power consumption while rotationally driving a compressor with an electric motor and preventing surging of the compressor, and can also decrease the amount of engine smoke at the start of the engine.

### {Brief Description of Drawings}

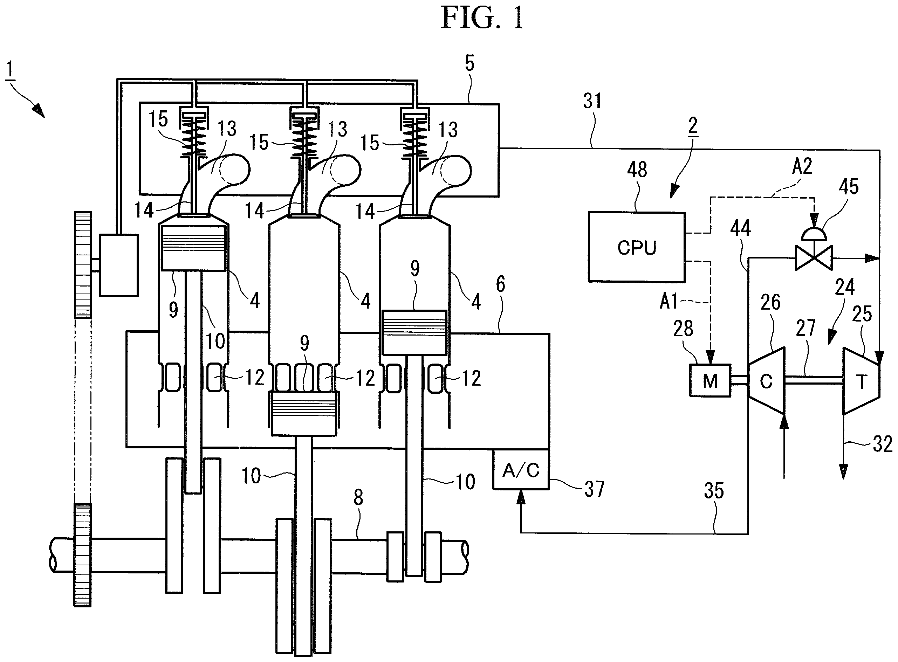

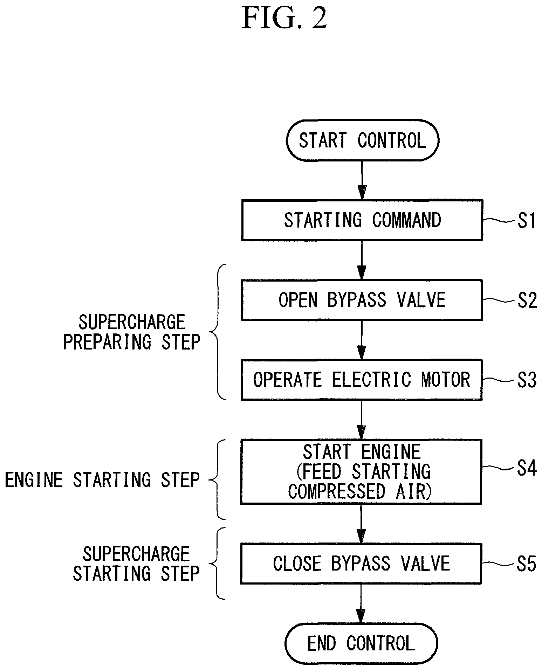

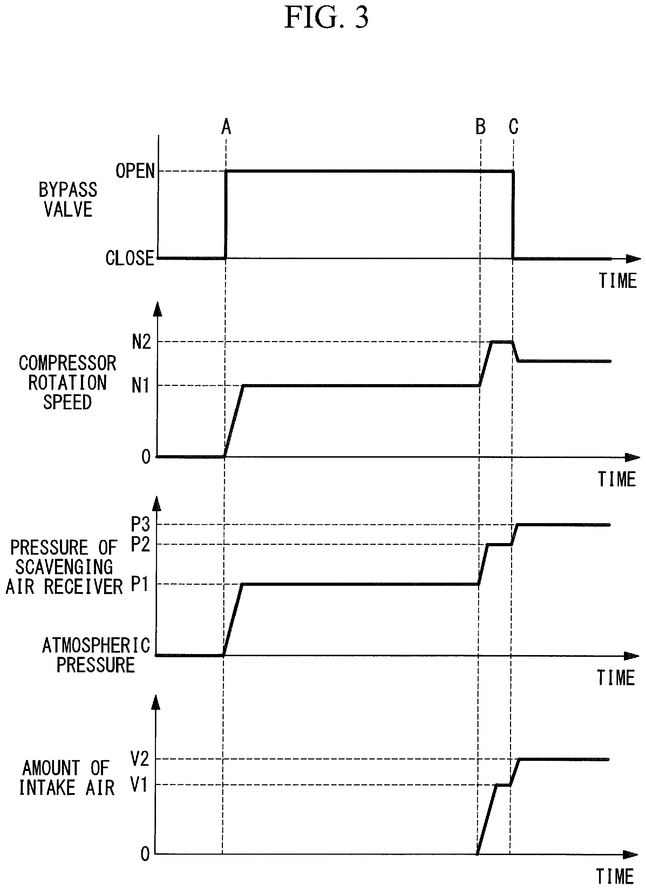

{Figure 1} FIG. 1 is a schematic configuration view of a marine large-sized diesel engine and a starter illustrating an embodiment of the present invention.
{Figure 2} FIG. 2 is a flowchart illustrating the flow of control of the starting equipment.
{Figure 3} FIG. 3 is a diagrammatic view illustrating a relationship among opening and closing timing of a bypass valve, rotation speed of a compressor, pressure of a scavenging air receiver, and the amount of air flowing to an engine.

### {Description of Embodiments}

An embodiment of the present invention will be described below with reference to the drawings.

FIG. 1 is a schematic configuration view of a marine large-sized diesel engine 1 and a starting equipment 2 illustrating an embodiment of the present invention.

For example, the marine large-sized diesel engine 1 (engine) is a uniflow-type two-cycle engine equipped with a plurality of combustion cylinders 4, an exhaust gas manifold 5, and a scavenging air receiver 6. A crankshaft 8 is pivotally supported under each of the combustion cylinders 4, with pistons 9 inserted into the combustion cylinders 4 being connected with the crankshaft 8 through connecting rods 10. Reciprocating motions of the pistons 9 in the combustion cylinders 4 are converted into rotary motions of the crankshaft 8, and are used as an output of the marine large-sized diesel engine 1.

Each of the combustion cylinders 4 has scavenging ports 12 communicating with the inside of the scavenging air receiver 6, the scavenging ports 12 being provided in the vicinity of lower portions of the combustion cylinders 4. Each of the combustion cylinders 4 has an exhaust gas port 13 and an exhaust gas valve 14 provided in their upper portions, the exhaust gas port 13 being connected with the exhaust gas manifold 5, the exhaust gas valve 14 being configured to open and close the exhaust gas port 13. The exhaust gas valves 14 are constantly biased in a valve closing direction with valve springs 15 (generally air springs), respectively. The exhaust gas valves 14 are hydraulically opened.

The marine large-sized diesel engine 1 is provided with an electric exhaust gas turbocharger 24. The electric exhaust gas turbocharger 24 is configured such that an exhaust gas turbine 25 and a compressor 26 rotate in unison through a rotor shaft 27. An electric motor 28 provided in one end of the rotor shaft 27 assists rotation of the compressor 26 (rotor shaft 27).

An exhaust gas gas supply pipe 31 extending from the exhaust gas manifold 5 is connected to an exhaust gas inlet of the exhaust gas turbine 25, and an exhaust gas gas discharge pipe 32 extends from a discharge outlet of the exhaust gas turbine 25. A compressed air pipe 35 extending from a compressed air outlet of the compressor 26 is connected to an air cooler 37 attached to the scavenging air receiver 6.

Furthermore, a bypass passage 44 is disposed to connect the compressed air outlet of the compressor 26 and the exhaust gas inlet of the exhaust gas turbine 25. The bypass passage 44 is connected to a bypass valve 45. The bypass valve 45 is an on-off valve which opens and closes the bypass passage 44. The bypass passage 44 also communicates with the scavenging air receiver 6 through the compressed air pipe 35. The bypass passage 44 may be arranged to be branched from the compressed air pipe 35 and to be connected to the exhaust gas inlet of the exhaust gas turbine 25.

The exhaust gas gas discharged during operation of the marine large-sized diesel engine 1 is supplied to the exhaust gas turbine 25 through the exhaust gas manifold 5 and the exhaust gas gas supply pipe 31, so that the exhaust gas turbine 25 is rotationally driven at high speed. The exhaust gas gas after driving the exhaust gas turbine 25 is discharged to the outside through the exhaust gas gas discharge pipe 32.

When the exhaust gas turbine 25 rotates, the compressor 26 also rotates, so that the atmospheric air is compressed in the compressor 26. The compressed air travels through the compressed air pipe 35 and passes the air cooler 37 before being supplied to the scavenging air receiver 6. The compressed air is then supplied to each of the combustion cylinders 4 through the scavenging ports 12. Since intake air is compressed by using the energy of the exhaust gas gas in this way, an air filling rate for filling each of the combustion cylinders 4 with air can be enhanced to achieve enhanced engine efficiency.

When the marine large-sized diesel engine 1 is operated generally in the condition of 30% or more load, the exhaust gas turbine 25 can rotationally be driven with the energy of exhaust gas gas, so that the compressor 26 can be operated as described before.

However, at the start of the engine or when the engine is operated in the condition of 30% or less load, the amount of exhaust gas gas emission is small, which hinders sufficient operation of the compressor 26. Accordingly, the electric motor 28 assists rotation the compressor 26 to prevent reduction in the air filling rate.

The starting equipment 2 provided in the marine large-sized diesel engine 1 is configured to include a start control unit 48, a bypass passage 44, and a bypass valve 45. For example, the start control unit 48 is a control unit (CPU), which sends operation signals A1 and A2 to the electric motor 28 of the electric exhaust gas turbocharger 24 and the bypass valve 45, respectively.

Now a description is given of a starting method in the starting equipment 2 and the flow of control by the start control unit 48 with reference to FIGS. 2 and 3.

FIG. 2 is a flowchart illustrating the flow of control in the starter 2. FIG. 3 is a diagrammatic view illustrating a relationship among opening and closing timing of the bypass valve 45, rotation speed of the compressor 26, pressure of the scavenging air receiver 6, and the amount of air flowing to the marine large-sized diesel engine 1.

The starting method includes "supercharge preparing step", "engine starting step" and "supercharge starting step."

First, after the start of control, an engine starting command is issued (step S1 of FIG. 2, a point A of FIG. 3). In response to the starting command, the start control unit 48 opens the bypass valve 45 (step S2), and operates the electric motor 28 (step S3). Steps S2 and S3 correspond to "supercharge preparing step". Accordingly, the compressor 26 starts to rotate at a fixed rotation speed N1.

The timing of opening the bypass valve 45 and the timing of operating the electric motor 28 may be prior to the point A of FIG. 3. However, if the electric motor 28 is operated before opening the bypass valve 45, the air compressed in the compressor 26 is sent to the scavenging air receiver 6, which disadvantageously causes surging in the compressor 26 as described before.

The air compressed in the compressor 26 driven by the electric motor 28 flows from the compressed air outlet of the compressor 26 and through the bypass passage 44 into the exhaust gas inlet of the exhaust gas turbine 25. Since the compressed air outlet of the compressor 26 communicates with the scavenging air receiver 6, the pressure of the compressed air discharged from the compressor 26 is also applied to the scavenging air receiver 6. As a result, the pressure of the scavenging air receiver 6 goes up from the atmospheric pressure to P1 illustrated in FIG. 3

In a uniflow-type two-cycle engine like the marine large-sized diesel engine 1, even when the exhaust gas valve 14 is closed and the compressed air from the compressor 26 cannot flow into the scavenging air receiver 6 because the engine is not yet started, all the compressed air flow into the exhaust gas turbine 25, so that surging of the compressor 26 is prevented. In addition, a high rotation speed of the compressor 26 can be maintained.

Although motive power is necessary to rotate the compressor 26 with the electric motor 28 to generate compressed air, the generated compressed air is supplied to the exhaust gas turbine 25 through the bypass passage 44, and rotationally drives the exhaust gas turbine 25 and also rotationally drives the compressor 26 coaxial with the exhaust gas turbine 25. Accordingly, it is possible to drive the compressor 26 with less power, so that the required power of the electric motor 28 can be reduced compared with the case where the bypass passage 44 is not provided.

Next, the marine large-sized diesel engine 1 is started while the electric motor 28 rotates the compressor 26 (step S4 of FIG. 2, a point B of FIG. 3).

In the marine large-sized diesel engine 1, the combustion cylinders 4 are charged with the starting compressed air, and the pistons 9 are depressed to start the engine. Step S4 corresponds to the engine starting step.

Since the electric motor 28 rotates the compressor 26 of the electric exhaust gas turbocharger 24 in advance before the engine starting step, the rotation speed of the compressor 26 can quickly be increased concurrently with the start of the engine 1 so as to secure a sufficient amount of air at the start of the engine.

Therefore, the pressure of the scavenging air receiver 6 can be boosted to start the marine large-sized diesel engine 1 with less power consumption. As a result, it becomes unnecessary to boost the pressure of the scavenging air receiver 6 by using an electric auxiliary blower as in the conventional cases. Therefore, the electric auxiliary blower can be omitted. In addition, it also is possible to increase the amount of combustion air at the start of the engine to enhance the combustion state, and to thereby decrease the amount of engine smoke discharged at the start of the engine.

When the marine large-sized diesel engine 1 is started, the exhaust gas turbine 25 is rotationally driven with both the energy of the exhaust gas gas discharged from each of the combustion cylinders 4 and the driving force of the electric motor 28. Accordingly, the rotation speed of the compressor 26 increases from N1 to N2. As a result, the scavenging air receiver 6 is supercharged with a larger amount of air, which causes the scavenging air receiver pressure to increase from P1 to P2. The amount of intake air of the marine large-sized diesel engine 1 also increases from 0 to V1.

The bypass valve 45 is closed at the timing corresponding to the start of the marine large-sized diesel engine 1 (step S5 of FIG. 2, a point C of FIG. 3). When the bypass valve 45 is closed, the compressed air generated in the compressor 26 is no longer supplied to the exhaust gas turbine 25. As a result, all the compressed air is sent to the scavenging air receiver 6, and the engine shifts to normal operation performed with the electric exhaust gas turbocharger 24. Accordingly, step S5 corresponds to the supercharge starting step.

The rotation speed of the compressor 26 falls to a midpoint of N2 and N1 when the bypass valve 45 is closed and the compressed air of the compressor 26 is no longer supplied to the exhaust gas turbine 25. Meanwhile, the pressure of the scavenging air receiver 6 increases from P2 to P3 because all the compressed air generated in the compressor 26 is sent to the scavenging air receiver 6 as described before. As a result, the amount of intake air of the marine large-sized diesel engine 1 increases from V1 to V2, so that the engine shifts to the normal operation.

In FIG. 3, the timing of closing the bypass valve 45 (point C) is immediately after the start timing (point B) of the marine large-sized diesel engine 1. For example, the bypass valve 45 is closed several seconds after a starting air feeder feeds the starting compressed air to the combustion cylinders 4 to start the engine. Accordingly, it is possible to reliably prevent occurrence of surging in the compressor 26 due to the influence of the compressed air which cannot flow into the scavenging air receiver 6 before the start of the engine.

As described in the foregoing, the starting equipment 2 of an engine, the starting method, and the ship equipped with the starting equipment 2 according to the present invention can start the engine with less power consumption while rotationally driving the compressor 26 with the electric motor 28 and preventing surging of the compressor 26 in the electric exhaust gas turbocharger 24, and can also decrease the amount of engine smoke at the start of the engine.

The present invention is not limited to the embodiment disclosed, and appropriate arrangements and modifications may be applied without departing from the scope of the present invention as defined by the appendent claims.

For example, in the embodiment disclosed, the present invention is applied to the large-sized marine diesel engine mounted as a main engine of a ship. However, the present invention is applicable not only to marine engines but also to engines of other applications. The present invention is also applicable not only to two-cycle engines but also to four-cycle engines.

### {Reference Signs List}

- 1: Marine large-sized diesel engine (engine)
- 2: Starting equipment
- 4: Combustion cylinder
- 5: Exhaust gas manifold
- 6: Scavenging air receiver
- 12: Scavenging port
- 13: Exhaust gas port
- 14: Exhaust gas valve
- 24: Electric exhaust gas turbocharger
- 25: Exhaust gas turbine
- 26: Compressor
- 27: Rotor shaft
- 28: Electric motor
- 35: Compressed air pipe (Passage extending from compressor to engine)
- 44: Bypass passage
- 45: Bypass valve
- 48: Start control unit
- S2, S3: Supercharge preparing step
- S4: Engine starting step
- S5: Supercharge starting step

## Claims

1. A starting equipment of an engine equipped with an electric exhaust gas turbocharger (24) having an electric motor (28) that assists rotation of a compressor (26), comprising:
a bypass passage (44) configured to connect a compressed air outlet of the compressor (26) and an exhaust gas inlet of an exhaust gas turbine (25);
a bypass valve (45) configured to open and close the bypass passage (44); and
a start control unit (48) configured to open the bypass valve (45), and to close the bypass valve (45) at a timing corresponding to the start of the engine; wherein
the start control unit (48) is configured to rotate the compressor (26) by the electric motor (28) before start of the engine, to keep the compressor (26) rotating by the electric motor (28) at least at the start of the engine;
**characterized in that**
- the start control unit (48) is configured to open the bypass valve (45) before start of the engine; and
- the compressor (26) is configured to supply compressed air to the exhaust gas inlet of the exhaust gas turbine before start of the engine.

2. The starting equipment according to claim 1, wherein a passage (35) extending from the compressor (26) to the engine is constantly opened.

3. The starting equipment according to claim 1, wherein
the engine is a two-cycle engine, and compressed air of the compressor (26) driven by the electric motor (28) is supplied to the bypass passage (44) and a scavenging air receiver (6) of the engine before the start of the engine.

4. The starting equipment according to any one of claim 1 to 3, wherein
the engine is a two-cycle engine, and the timing of closing the bypass valve (45) is immediately after the start of the two-cycle engine.

5. A ship equipped with the starting equipment according to any one of claims 1 to 4.

6. A starting method of an engine equipped with an electric exhaust gas turbocharger (24) having an electric motor (28) configured to assist rotation of a compressor (26), comprising:
a supercharge preparing step (S2, S3) of rotating the compressor (26) of the electric exhaust gas turbocharger (24) by the electric motor (28) and supplying compressed air discharged from the compressor (26) into an exhaust gas inlet of an exhaust gas turbine side before the start of the engine;
an engine starting step (S4) of starting the engine while rotating the compressor (26) by the electric motor; and
a supercharge starting step (S5) of passing the compressed air to the engine at a timing corresponding to the start of the engine.

## Patentansprüche

1. Startausstattung eines Motors, der mit einem elektrischen Abgasturbolader (24) ausgestattet ist, der einen Elektromotor (28) aufweist, der die Drehung eines Kompressors (26) unterstützt, umfassend:
einen Bypass-Durchgang (44), der konfiguriert ist, um einen Druckluftauslass des Kompressors (26) und einen Abgaseinlass einer Abgasturbine (25) zu verbinden;
ein Bypass-Ventil (45), das konfiguriert ist, um den Bypass-Durchgang (44) zu öffnen und zu schließen; und
eine Startsteuereinheit (48), die konfiguriert ist, um das Bypass-Ventil (45) zu öffnen, und das Bypass-Ventil (45) zu einem Zeitpunkt zu schließen, der dem Start des Motors entspricht; wobei
die Startsteuereinheit (48) konfiguriert ist, um den Kompressor (26) vor dem Start des Motors durch den Elektromotor (28) zu drehen, um den Kompressor (26) durch den Elektromotor (28) zumindest beim Start des Motors drehend zu halten;
**dadurch gekennzeichnet, dass**
- die Startsteuereinheit (48) konfiguriert ist, um das Bypass-Ventil (45) vor dem Start des Motors zu öffnen; und
- der Kompressor (26) konfiguriert ist, um dem Abgaseinlass der Abgasturbine vor dem Start des Motors Druckluft zuzuführen.

2. Startausstattung nach Anspruch 1, wobei ein Durchgang (35), der sich vom Kompressor (26) zum Motor erstreckt, ständig geöffnet ist.

3. Startausstattung nach Anspruch 1, wobei
der Motor ein Zweitaktmotor ist, und Druckluft des Kompressors (26), der durch den Elektromotor (28) angetrieben wird, vor dem Start des Motors zu dem Bypasskanal (44) und einem Spülluftempfänger (6) des Motors zugeführt wird.

4. Startausstattung nach einem der Ansprüche 1 bis 3, wobei
der Motor ein Zweitaktmotor ist und der Zeitpunkt des Schließens des Bypass-Ventils (45) unmittelbar nach dem Start des Zweitaktmotors liegt.

5. Schiff, das mit der Startausstattung nach einem der Ansprüche 1 bis 4 ausgestattet ist.

6. Startverfahren für einen Motor, der mit einem elektrischen Abgasturbolader (24) ausgestattet ist, der einen Elektromotor (28) aufweist, der konfiguriert ist, um die Drehung eines Kompressors (26) zu unterstützen, umfassend:
einen Auflade-Vorbereitungsschritt (S2, S3) zum Drehen des Kompressors (26) des elektrischen Abgasturboladers (24) durch den Elektromotor (28) und zum Zuführen von aus dem Kompressor (26) ausgestoßener Druckluft in einen Abgaseinlass einer Abgasturbinenseite vor dem Start des Motors;
einen Motorstartschritt (S4) zum Starten des Motors, während der Kompressor (26) durch den Elektromotor gedreht wird; und
einen Auflade-Startschritt (S5) zum Leiten der Druckluft zu dem Motor zu einem Zeitpunkt, der dem Start des Motors entspricht.

## Revendications

1. Équipement de démarrage d'un moteur équipé d'un turbocompresseur électrique à gaz d'échappement (24) ayant un moteur électrique (28) qui aide la rotation d'un compresseur (26), comprenant :
un passage de dérivation (44) configuré pour raccorder une sortie d'air comprimé du compresseur (26) et une entrée de gaz d'échappement d'une turbine à gaz d'échappement (25) ;
un clapet de dérivation (45) configuré pour ouvrir et fermer le passage de dérivation (44) ; et
une unité de commande de démarrage (48) configurée pour ouvrir le clapet de dérivation (45), et pour fermer le clapet de dérivation (45) à un moment correspondant au démarrage du moteur ; dans lequel
l'unité de commande de démarrage (48) est configurée pour faire tourner le compresseur (26) par le moteur électrique (28) avant le démarrage du moteur, pour maintenir le compresseur (26) en rotation par le moteur électrique (28) au moins au démarrage du moteur ;
**caractérisé en ce que**
- l'unité de commande de démarrage (48) est configurée pour ouvrir le clapet de dérivation (45) avant le démarrage du moteur ; et
- le compresseur (26) est configuré pour fournir de l'air comprimé à l'entrée de gaz d'échappement de la turbine à gaz d'échappement avant le démarrage du moteur.

2. Équipement de démarrage selon la revendication 1, dans lequel un passage (35) s'étendant à partir du compresseur (26) vers le moteur est constamment ouvert.

3. Équipement de démarrage selon la revendication 1, dans lequel
le moteur est un moteur deux-temps, et l'air comprimé du compresseur (26) entraîné par le moteur électrique (28) est introduit dans le passage de dérivation (44) et un récepteur d'air de balayage (6) du moteur avant le démarrage du moteur.

4. Équipement de démarrage l'une quelconque des revendications 1 à 3, dans lequel
le moteur est un moteur deux-temps, et le moment de la fermeture du clapet de dérivation (45) est immédiatement après le démarrage du moteur deux-temps.

5. Navire équipé de l'équipement de démarrage selon l'une quelconque des revendications 1 à 4.

6. Procédé de démarrage d'un moteur équipé d'un turbocompresseur électrique à gaz d'échappement (24) ayant un moteur électrique (28) configuré pour aider la rotation d'un compresseur (26), comprenant :
une étape de préparation de suralimentation (S2, S3) comprenant la rotation du compresseur (26) du turbocompresseur électrique à gaz d'échappement (24) par le moteur électrique (28) et l'introduction de l'air comprimé évacué par le compresseur (26) dans une entrée de gaz d'échappement d'un côté turbine à gaz d'échappement avant le démarrage du moteur ;
une étape de démarrage de moteur (S4) comprenant le démarrage du moteur tout en faisant tourner le compresseur (26) par le moteur électrique ; et
une étape de démarrage de suralimentation (S5) comprenant le passage de l'air comprimé vers le moteur à un moment correspondant au démarrage du moteur.
